Europäisches Patentamt

European Patent Office

Office européen des brevets

(11) Publication number: **0 347 182**
**A2**

## EUROPEAN PATENT APPLICATION

(21) Application number: **89305977.4**

(22) Date of filing: **13.06.89**

(51) Int. Cl.⁴: **B 41 M 3/00**

(30) Priority: **14.06.88 US 206700**

(43) Date of publication of application:
**20.12.89 Bulletin 89/51**

(84) Designated Contracting States:
**AT BE CH DE ES FR GB GR IT LI LU NL SE**

(71) Applicant: **BINNEY & SMITH INC.**
**1100 Church Lane P.O.431**
**Easton Pennsylvania 18044-0431 (US)**

(72) Inventor: **Harryn, Jennifer Lynne**
**544 Main Street**
**Bethlehem Pennsylvania 18018 (US)**

**Hogan, Janden**
**Packard Building 317-21 N. Broad Street**
**Philadelphia Pennsylvania 19107 (US)**

(74) Representative: **Chettle, Adrian John et al**
**Withers & Rogers 4, Dyer's Buildings**
**Holborn London EC1N 2JT (GB)**

(54) **Coloring articles.**

(57) An article and process for preparing an article for coloring comprising at least one sheet of paper or paperboard or the like on which there is disposed at least one image having at least a portion to be colored. The portion of the image which is to be colored is defined by border lines which are relatively wide and which are textured, generally lighter in appearance and with softened edges.

EP 0 347 182 A2

**Description**

## COLORING ARTICLES

This invention relates to amusement articles and specifically to articles adapted to be colored.

Coloring books have long provided amusement for children and adults by the user coloring different objects or images which are outlined on the pages thereof. Such coloring books both amuse and stimulate the imagination of young children by permitting them to experiment freely with the use of different colors. Greater enjoyment is usually achieved, particularly by older children, when the colored image is neat and attractive. Coloring books or coloring sheets in the past contained outlines of objects or images defined by very thin border lines, usually on the order of 1/32 of an inch in width and which are of a brilliance substantially different from the background sheet so as to present a vivid contrast thereto. With such coloring sheets it is difficult, particularly with young children, to apply the colors in a manner which confines the desired colors within the border lines. When the applied colors are not so confined and overlap the border lines, the colored object or image is not well defined reducing its attractiveness and often resulting in less pleasure to the user.

It is a principal object of this invention to provide an improved article for coloring images thereon.

It is another object of this invention to provide an article for coloring images thereon which is easy to use and which enhances the enjoyment of the user.

It is a further object of this invention to provide an improved article for coloring images thereon in which the applied colors need not be meticulously contained within border lines in order to obtain a pleasing and attractive colored object.

It is still a further object of this invention to provide an improved article for coloring images thereon in which the portion of the image to be colored is defined by border lines which when colored integrate with and become part of the colored image.

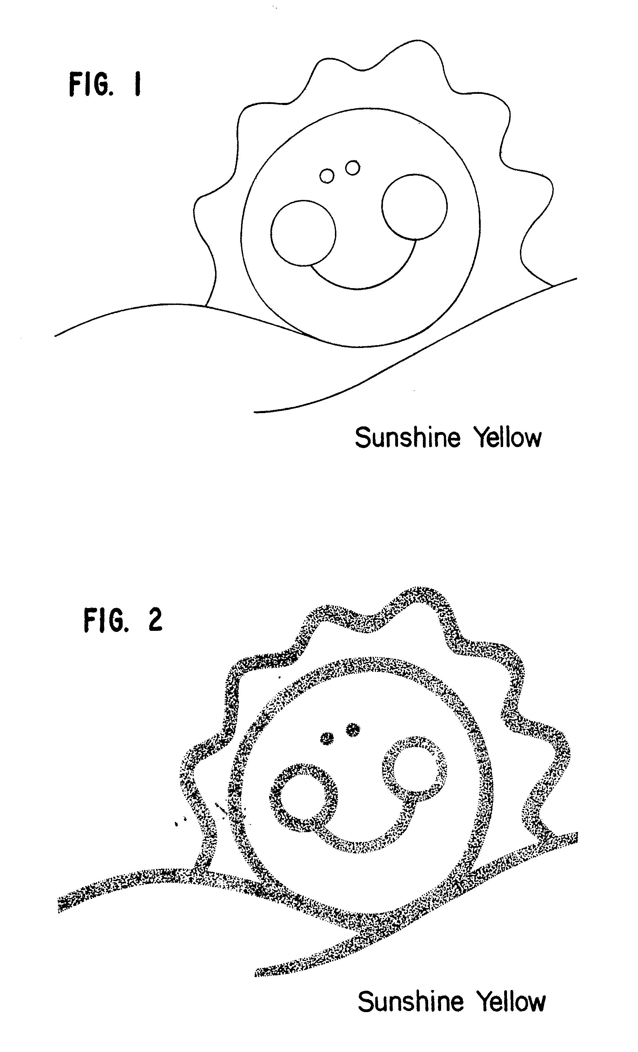

    Figure 1 illustrates a fanciful depiction of a "morning sun" to be colored having border lines as employed in prior art coloring sheets or coloring books.

    Figure 2 illustrates a fanciful depiction of a "morning sun" to be colored having border lines in accordance with the present invention.

    Figure 3 illustrates the effect of overlapping the border lines of the depiction of Figure 1 with an applied color.

    Figure 4 illustrates the effect of overlapping the border lines of the depiction of Figure 2 with an applied color.

The present invention involves an article for coloring comprising at least one sheet of paper or paperboard or the like on which there is disposed at least one image having at least a portion to be colored. The portion of the image which is to be colored is defined by border lines which are relatively wide (> 1/16 inch) and which are textured, generally lighter in appearance and with softened edges. The border lines are comprised of a plurality of dots arranged in a pattern that, when viewed, produce an identifiable half-tone gradation masking or obscuring color applied to said border lines. Such border lines are formed by using a combination of a line screen and a mezzotint screen. The use of one or the other of such screens for producing art designs is known. In these procedures black or white art is photographed through either a line screen or mezzotint screen. In this way, solid black areas are broken up into smaller dots of black. The line screens or mezzotint screens can vary as to the type of dots produced and the size of the dots which determines the degree of lightness (or darkness) of the area and the number of lines or dots per inch which affects the visual density of the area. The dot patterns are then transferred to a lithographic plate which prints only the dots.

In accordance with the invention, the background paper or paperboard can be of various colors. The border lines of images to be colored are produced by using a combination of a line screen and a mezzotint screen to produce a master screen through which the image is photographed. The border lines are then transferred to a lithograph plate and printed. The line screen produces border lines which are visually lighter than black with softened edges and the mezzotint screen adds texture.

The combination of original line art, line screen and mezzotint screen can be varied widely so as to produce border lines of varying width, texture and density. For example, to prepare images adapted to have portions colored by means of crayons, a master screen produced by use of a 20% 133 line screen and a 45 line mezzotint screen is advantageous for use to form the border lines. Border lines formed by this combination of screens are at least about 3/16 inch wide and have a textured appearance which provide a wider target for the coloring and because of the texture appear more natural when colored into or over. Use of a combination of a 60% 133 line screen and a 45 line mezzotint screen produces border lines of about 1/16 inch having a lighter appearance than black and texture which are eminently adapted to combine visually with a black crayon line.

Known coloring means such as crayons, paints and ink can be used in coloring the images. The paper or paperboard sheet carrying the images can be separate or individual sheets or a plurality of such sheets bound together to form a coloring book. Portions of the image can, if desired, be provided with color keys to suggest certain colors to be applied in various portions of the image.

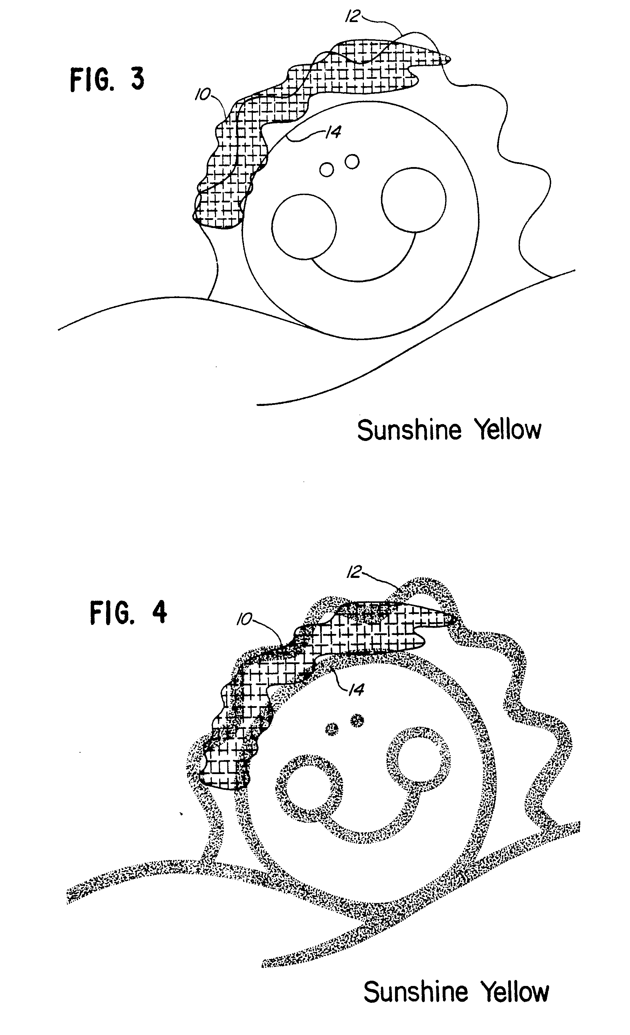

With the portions of the image to be colored defined by border lines in accordance with this invention, the demarcation between the portions to be colored and the other portions on the sheet is not sharply and vividly defined. As a result, meticulousness in coloring is not demanded as is the case where thin boundary lines of vivid contrast are used in prior art coloring books. Thus, with the present invention if the one applying the colors to the image fails to confine the colors exactly within the boundary lines, the deviation is less apparent than in the case of known coloring articles. This results in a more attractive colored image and greater pleasure and satisfaction to the user. The significant difference is illustrated in Figures 3 and 4. Thus, in Figure 3 the applied color designated by the numeral 10 overlaps the border lines 12 and 14 and is very noticeable and detracts from the appearance of the colored object. In contrast, in Figure 4, although the applied color 10 overlaps the border lines 12 and 14, the inexactness is very much less pronounced and noticeable which improves the exactness of the colored object.

Those modifications and equivalents which fall within the spirit of the invention are to be considered a part thereof.

## Claims

1. An article adapted for coloring comprising a sheet of paper or paperboard having thereon at least one image in which at least one portion thereof is to be colored, the portion of said image to be colored being defined by border lines comprised of a plurality of dots arranged in a pattern that, when viewed, produce an identifiable half-tone gradation masking or obscuring color applied to said border line.

2. An article adapted for coloring comprising a sheet of paper or paperboard having thereon at least one image in which at least one portion thereof is to be colored, the portion of said image to be colored being defined by border lines which are produced by photographing the image through a combination of a line screen and a mezzotint screen.

3. A process for producing an article for coloring which comprises photographing an image having a portion of which is to be colored by photographing the said image through a combination of a line screen and a mezzotint screen, transferring the photographed border lines to a lithograph plate and printing from the lithograph plate.

FIG. I

Sunshine Yellow

FIG. 2

Sunshine Yellow

FIG. 3

Sunshine Yellow

FIG. 4

Sunshine Yellow